# EUROPÄISCHE PATENTSCHRIFT

(11) **EP 3 925 832 B1**
(45) Veröffentlichungstag und Bekanntmachung des Hinweises auf die Patenterteilung: **22.03.2023**
(21) Anmeldenummer: 21176643.1
(22) Anmeldetag: 28.05.2021
(51) Int. Cl.: B60R 13/02, B60R 21/06, B60R 21/213

(54) **FAHRZEUGKAROSSERIE**
CAR BODYWORK
CARROSSERIE DE VÉHICULE

(30) Priorität: 17.06.2020 DE 102020207509
(43) Veröffentlichungstag der Anmeldung: 22.12.2021
(73) Patentinhaber: VOLKSWAGEN AG, 38440 Wolfsburg (DE)
(72) Erfinder: Fatemi, Akbar, 38116 Braunschweig (DE); Grünwald, Viktor, 38442 Wolfsburg (DE)

(56) Entgegenhaltungen:
- DE-A1-102015 202 858
- DE-A1-102016 214 203
- KR-B1- 100 794 012

## Beschreibung

Die Erfindung betrifft eine Fahrzeugkarosserie für ein - insbesondere zweispuriges - Fahrzeug nach dem Oberbegriff des Anspruches 1.

Die Karosserie- oder Rohbaustruktur eines zweispurigen Kraftfahrzeugs weist in gängiger Praxis einen Dachrahmen auf, der aus Dachrahmen-Längsträgern (das heißt Dachrahmen-Seitenteilen) und aus Dachrahmen-Querträgern aufgebaut ist. An den Dachrahmen-Seitenteilen sind unterschiedliche Anbauteile rohbaufest angebunden, etwa Halterungen für einen Kopfairbag oder Einhängebauteile zum Einhängen einer Netztrennwand-Stange.

In einer beispielhaften Fahrzeugkarosserie sind ein Kopfairbag und ein karosserieseitiges Trägerteil rohbaufest verbaut. Das karosserieseitige Trägerteil weist eine Einhängeöse zum Einhängen einer Netztrennwand-Stange auf. Sowohl das karosserieseitige Trägerteil als auch der Kopfairbag sind von einem Dachhimmel sichtgeschützt überdeckt. Der Dachhimmel weist eine Montageöffnung auf, in die eine Netztrennwand-Blende eingesetzt bzw. einsetzbar ist. Die Netztrennwand-Blende ist an einer Anbindungsstelle am Öffnungsrand der dachhimmelseitigen Montageöffnung befestigt bzw. befestigbar.

Bei einer Kopfairbag-Aktivierung drückt der sich entfaltende Kopfairbag derart gegen den Dachhimmel, dass sich dieser unter seitlicher Verformung in den Fahrzeuginnenraum hinein aufschwenkt. Dadurch kann sich der Kopfairbag in der Fahrzeughochrichtung nach unten in den Fahrzeuginnenraum hinein entfalten.

Es ist gewünscht, dass bei einer Kopfairbag-Aktivierung die Netztrennwand-Blende im sich verformenden Dachhimmel befestigt verbleibt und zusammen mit dem Dachhimmel aufschwenkt.

Aus der EP 3 178 703 A ist eine Vorrichtung zum Festhalten eines Bauteils bekannt. Die DE 10 2015 202 858 A1 offenbart eine Fahrzeugkarosserie mit einer Montageanordnung zum Einhängen einer Netztrennwand-Stange nach dem Oberbegriff von Anspruch 1.

Die Aufgabe der Erfindung besteht darin, eine Fahrzeugkarosserie bereitzustellen, bei der bei einer Kopfairbag-Aktivierung in konstruktiv einfacher Weise eine möglichst einwandfreie Kopfairbag-Entfaltung gegeben ist.

Die Aufgabe ist durch die Merkmale des Anspruches 1 gelöst. Bevorzugte Weiterbildungen der Erfindung sind in den Unteransprüchen offenbart.

Gemäß dem Anspruch 1 weist das karosserieseitige Trägerteil, in das bevorzugt eine Netztrennwand-Stange einhängbar ist, ein Abschirmelement auf. Das Abschirmelement ist in einer Airbag-Entfaltungsrichtung zwischen dem Kopfairbag und einem Bereich der (bevorzugt zwischen der Netztrennwand-Blende und dem Dachhimmel befindlichen) Anbindungsstelle angeordnet. Auf diese Weise wird bei einer - insbesondere crashbedingten - Airbag-Aktivierung die Anbindungsstelle gegenüber dem sich entfaltenden Kopfairbag abgeschirmt. Die Anbindungsstelle wird daher bei der Kopfairbag-Entfaltung kräftemäßig entlastet.

Nachfolgend wird für ein leichteres Verständnis der Erfindung speziell Bezug auf eine Netztrennwand-Halterung genommen, bei der eine Netztrennwand-Stange in eine Einhängeöse des karosserieseitigen Trägerteils einhängbar ist. Ohne den Bereich der Erfindung oder den Schutzbereich des Schutzrechts zu verlassen, ist das karosserieseitige Trägerteil nicht auf eine solche Netztrennwand-Halterung beschränkt, sondern vielmehr auf die Halterung beliebiger Anbauteile anwendbar. Entsprechend ist die Erfindung nicht auf die Anbindung der Netztrennwand-Blende im Dachhimmel beschränkt, sondern vielmehr generell auf die Anbindung eines Funktionsteils in einer dachhimmelseitigen Montageöffnung gerichtet.

Zudem wird nachfolgend speziell Bezug genommen auf eine Netztrennwand, da Netze als Material für eine aufrollbare Trennwand zwischen einem Insassenraum und einem Laderaum im Personenkraftwagen-Bereich am weitesten verbreitet sind. Ohne den Bereich der Erfindung oder den Schutzbereich des Schutzrechts zu verlassen, kann anstelle eines Netzes oder zusätzlich zu einem Netz auch ein anderes, flächiges, aufrollbares Material als derartiges Trennwandmaterial benutzt werden, zum Beispiel textile Gewebe oder Gewirke, durchsichtige oder teiltransparente oder durchscheinende oder undurchsichtige Kunststofffolien, Jalousien, Stabrollos oder eine Mischung dieser Materialien. In einer weiteren Ausführungsvariante kann auf die Bereitstellung einer Aufwickeleinrichtung für die Netztrennwand verzichtet werden. In diesem Fall kann die Netztrennwand anstelle dessen zusammengefaltet und verstaut werden.

In einer technischen Umsetzung kann das karosserieseitige Trägerteil einen Trägerteil-Grundkörper zur Halterung des Anbauteils aufweisen. Beispielhaft kann der Trägerteil-Grundkörper ein Blechformteil sein, das durch Blechumformung, insbesondere durch Abkantung, gefertigt wird. In diesem Fall kann an dem Trägerteil-Grundkörper das Abschirmelement materialeinheitlich und einstückig angeformt sein.

Die Erfindung ist insbesondere auf eine Einbausituation anwendbar, bei der die zwischen dem Funktionsteil (d.h. zwischen der Netztrennwand-Blende) und dem Dachhimmel gebildete Anbindungsstelle mit einem vertikalen Überstand den Trägerteil-Grundkörper in der Fahrzeughochrichtung nach fahrzeugunten überragt. In diesem Fall kann der vertikale Überstand der Anbindungsstelle, in der Fahrzeughochrichtung betrachtet, in etwa auf gleicher Höhe wie der Kopfairbag positioniert sein, um eine zuverlässige Abschirmung vor einer Kopfairbag-Entfaltung zu gewährleisten.

In der obigen Einbaukonstellation ist es bevorzugt, wenn das Abschirmelement über eine Bauteilhöhe von dem Trägerteil-Grundkörper nach fahrzeugunten abragt. Auf diese Weise kann das Abschirmelement in der Fahrzeugquerrichtung in Querflucht zwischen dem Kopfairbag und dem vertikalen Überstand der Anbindungsstelle positioniert werden.

Der Kopfairbag und/oder das karosserieseitige Trägerteil können bevorzugt an einem, in der Fahrzeuglängsrichtung verlaufenden Dachrahmen-Seitenteil rohbaufest angebunden sein. Zwischen dem Dachrahmen-Seitenteil und dem Dachhimmel erstreckt sich ein lichter Abstand. Dieser kann mittels des Abschirmelements unterteilt sein in einen fahrzeugäußeren Airbag-Entfaltungsraum, in dem der Kopfairbag angeordnet ist, und in einen vor Airbag-Entfaltung geschützten fahrzeuginneren Freiraum, der sich zwischen dem Abschirmelement und dem Dachhimmel aufspannt.

Im Hinblick auf eine einwandfreie Airbag-Entfaltung ist es bevorzugt, wenn der Airbag-Entfaltungsraum in der Fahrzeughochrichtung nach fahrzeugoben zumindest teilweise von einem Grundkörper-Boden des Trägerteil-Grundkörpers begrenzt ist. Um die Airbag-Entfaltung günstig zu lenken, ist es zudem bevorzugt, wenn der Airbag-Entfaltungsraum in der Fahrzeugquerrichtung nach fahrzeugaußen vom Dachrahmen-Seitenteil begrenzt ist und nach fahrzeuginnen vom Abschirmelement begrenzt ist. Das Abschirmelement wirkt daher zusätzlich als ein Umlenkelement, entlang dessen Innenfläche sich der Kopfairbag nach fahrzeugunten zielgerichtet entfalten kann.

Erfindungsgemäß weist das karosserieseitige Trägerteil zwei Abschirmelemente auf, die in der Fahrzeuglängsrichtung voneinander beabstandet sind. Auf diese Weise ist eine in der Fahrzeuglängsrichtung ausreichend lange Abschirmung der Anbindungsstelle zwischen dem Funktionsteil und dem Dachhimmel gewährleistet.

Insbesondere im Hinblick auf eine Serienfertigung ist eine konstruktiv einfache Ausführung des karosserieseitigen Trägerteils von Bedeutung. Bevorzugt kann das karosserieseitige Trägerteil ein, an Biegekanten abgekantetes Blechformteil sein. Im Hinblick auf eine einfache Fertigung ist es bevorzugt, wenn sich sämtliche Biegekanten des Blechformteils achsparallel in der Fahrzeuglängsrichtung erstrecken. Ein Grundkörper-Boden des karosserieseitigen Trägerteils kann an einer Biegekante in einen fahrzeugäußeren Montageschenkel übergehen, der am Dachrahmen-Seitenteil befestigbar ist. Zudem kann der Grundkörper-Boden des karosserieseitigen Trägerteils an einer Biegekante in ein fahrzeuginneres Tragprofil übergehen, an dem das Anbauteil (das heißt zum Beispiel die Netztrennwand-Stange) gehaltert werden kann.

Im Hinblick auf eine einfache Integration der Abschirmelemente ist die folgende konstruktive Weiterbildung bevorzugt: So kann der Grundkörper-Boden in der Fahrzeuglängsrichtung nach fahrzeugvorne und/oder nach fahrzeughinten mit einem Boden-Überstand verlängert sein. Vom Boden-Überstand kann an einer fahrzeuginneren Biegekante eine das Abschirmelement bildende Blechlasche abgekantet sein.

Nachfolgend ist ein Ausführungsbeispiel der Erfindung anhand der beigefügten Figuren beschrieben.

Es zeigen:
- Fig. 1: in einer Seitenansicht ein zweispuriges Fahrzeug mit teilweisem Aufriss, der eine Netztrennwand in der Gebrauchslage zeigt.
- Fig. 2: in einer Blickrichtung von fahrzeuginnen eine Ansicht auf im Dachhimmel integrierte Netztrennwand-Blenden;
- Fig. 3: eine Detailansicht aus der Fig. 2;
- Fig. 4: eine Schnittdarstellung entlang der Schnittebene B-B aus der Fig. 3; und

- Fig. 5: eine Ansicht entsprechend der Fig. 4 gemäß einer nicht von der Erfindung umfassten Vergleichsform.

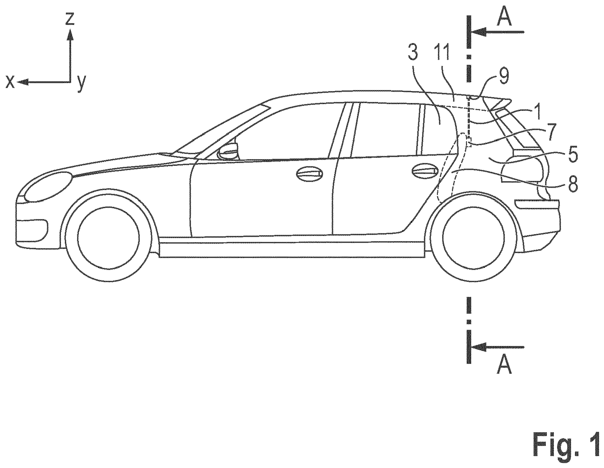

In der Fig. 1 ist ein Fahrzeug in Seitenansicht gezeigt, dass heckseitig eine Netztrennwand 1 aufweist, die in der dargestellten Gebrauchslage einen Insassenraum 3 von einem heckseitigen Laderaum 5 trennt. Die Netztrennwand 1 weist in der Fig. 1 eine Aufwickelkassette 7 auf, die rückseitig an einer Rückenlehne 8 einer Rücksitzbank des Fahrzeugs positioniert ist. In der Fig. 1 ist die Netztrennwand 1 entgegen einer Federkraft aus der Aufwickelkassette 7 herausgezogen und mit ihrer Netztrennwand-Stange 9 in am Dachhimmel 11 angeordnete Einhängeöffnungen eingehängt, die mit Bezug auf eine Fahrzeugmittellängsachse beidseitig spiegelbildlich am Dachhimmel 11 angeordnet sind und von denen eine Einhängegeometrie nachfolgend anhand der weiteren Figuren beschrieben ist.

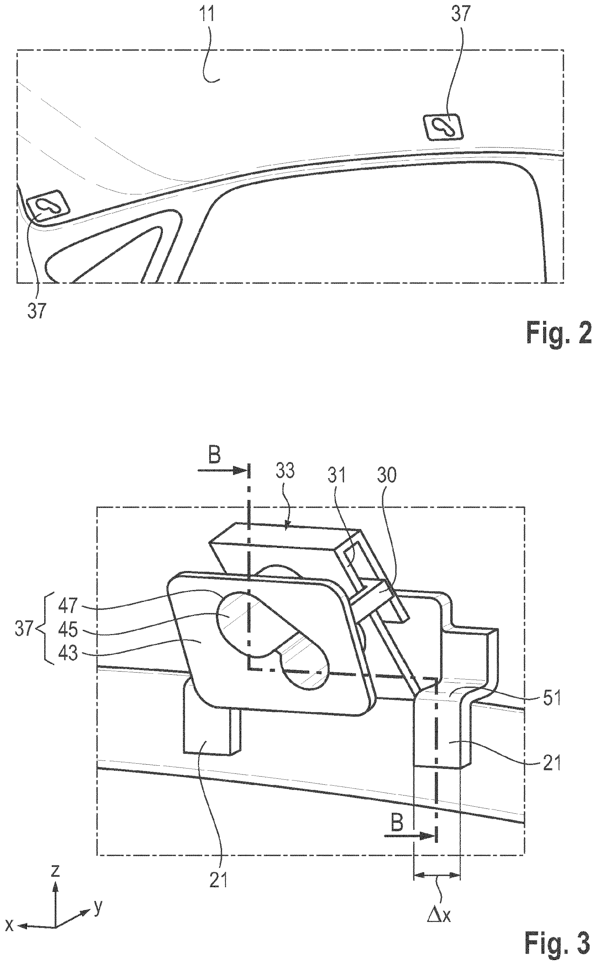

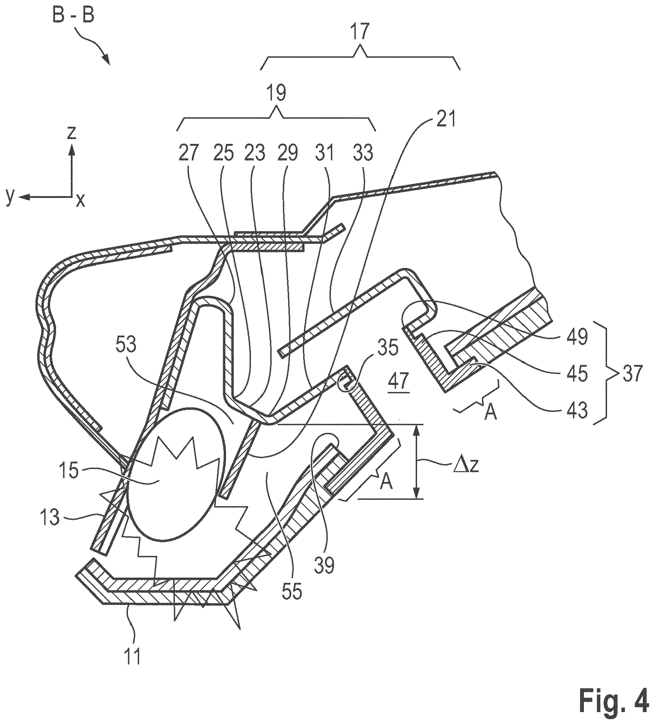

So weist gemäß der Fig. 4 die Fahrzeugkarosserie ein Dachrahmen-Seitenteil 13 auf, das Bestandteil eines Dachrahmens ist. An der Fahrzeuginnenseite des Dachrahmen-Seitenteils 13 ist ein Kopfairbag 15 sowie ein karosserieseitiges Trägerteil 17 rohbaufest montiert. Das karosserieseitige Trägerteil 17 ist ein abgekantetes Blechformteil mit einem Grundkörper 19 sowie mit daran angeformten Abschirmelementen 21, deren Funktionsweise später beschrieben wird. In der Fig. 3 weist der Trägerteil-Grundkörper 19 einen Grundkörper-Boden 23 auf. Dieser geht an einer fahrzeugäußeren Biegekante 25 in einen Montageschenkel 27 über, der an dem Dachrahmen-Seitenteil 13 befestigt ist. An einer fahrzeuginneren Biegekante 29 geht der Grundkörper-Boden 23 in einen Tragschenkel 31 eines fahrzeuginneren U-profilförmigen Tragprofils 33 über. Im Tragschenkel 31 des U-profilförmigen Tragprofils 33 ist eine Einhängeöse 35 (Figur 4) ausgebildet, in die eine nur in der Fig. 1 angedeutete Netztrennwand-Stange 9 einhängbar ist.

Wie aus der Fig. 3 oder 4 weiter hervorgeht, ist eine Netztrennwand-Blende 37 in einer dachhimmelseitigen Montageöffnung 39 (Fig. 4) eingesetzt. Die Netztrennwand-Blende 37 ist an deren Außenumfang an einer umlaufenden Anbindungsstelle A an einen Öffnungsrandbereich der dachhimmelseitigen Montageöffnung 39 angebunden.

In der Fig. 3 oder 4 weist die Netztrennwand-Blende 37 einen, dem Fahrzeuginnenraum zugewandten flächigen Basisabschnitt 43 auf, der innen in einen hohlzylindrischen Einführabschnitt 45 übergeht. Der hohlzylindrische Einführabschnitt 45 begrenzt eine Blendenöffnung 47, dessen Öffnungsrandbereich 49 durch die Einhängeöse 35 des karosserieseitigen Trägerteils 17 hindurchgeführt ist.

Wie aus der Fig. 4 weiter hervorgeht, überragt die zwischen der Netztrennwand-Blende 37 und dem Dachhimmel 11 befindliche, umlaufende Anbindungsstelle A den Trägerteil-Grundkörper 19 in der Fahrzeughochrichtung z nach fahrzeugunten mit einem vertikalen Überstand Δz (Fig. 4). Der vertikale Überstand Δz der Anbindungsstelle A ist, in der Fahrzeughochrichtung z betrachtet, auf gleicher Höhe wie der Kopfairbag 15 positioniert. In der Querflucht zwischen dem Kopfairbag 15 und dem vertikalen Überstand Δz der Anbindungsstelle A ist das am Trägerteil-Grundkörper 19 gebildete Abschirmelement 21 positioniert.

Das Abschirmelement 21 ist konstruktiv einfach wie folgt im Trägerteil 17 realisiert: Demnach ist der Grundkörper-Boden 23 gemäß der Figur 3 in der Fahrzeuglängsrichtung x nach fahrzeugvorne und nach fahrzeughinten jeweils mit einem Boden-Überstand Δx verlängert. Vom jeweiligen Boden-Überstand Δx ist jeweils an einer fahrzeuginneren Biegekante 51 eine das Abschirmelement 21 bildende Blechlasche nach unten abgekantet.

In der Fig. 4 unterteilt die dargestellte Blechlasche (d.h. das Abschirmelement 21) den lichten Abstand zwischen dem Dachrahmen-Seitenteil 13 und dem Dachhimmel 11 in einen fahrzeugäußeren Airbag-Entfaltungsraum 53, in dem Kopfairbag 15 angeordnet ist, und in einen vor Airbag-Entfaltung geschützten fahrzeuginneren Freiraum 55. Dieser erstreckt sich in der Fahrzeugquerrichtung y zwischen dem Abschirmelement 21 und dem Dachhimmel 11. Demgegenüber erstreckt sich der Airbag-Entfaltungsraum 53, in der Fahrzeugquerrichtung y betrachtet, zwischen dem Dachrahmen-Seitenteil 13 und dem Abschirmelement 21. Der Airbag-Entfaltungsraum 53 ist zudem in der Fahrzeughochrichtung z nach fahrzeugoben vom Grundkörper-Boden 23 begrenzt.

Der Airbag-Entfaltungsraum 53 weist in der Fahrzeughochrichtung z nach fahrzeugunten einen offenen Airbag-Austritt auf, durch den eine Airbag-Entfaltung nach fahrzeugunten gewährleistet ist. Der vertikale Überstand Δz der umlaufenden Anbindungsstelle A bleibt (infolge des Abschirmelements 21) zuverlässig außer Kontakt mit dem sich entfaltenden Kopfairbag 15. Auf diese Weise ist gewährleistet, dass die Netztrennwand-Blende 37 im Seitencrashfall am Dachhimmel 11 befestigt bleibt und zusammen mit dem Dachhimmel 11 in Richtung Fahrzeuginnenraum aufschwenkt.

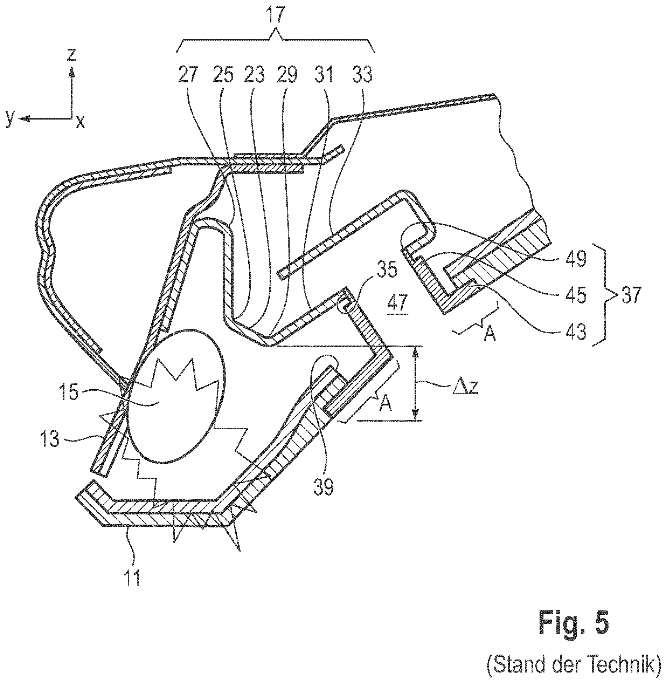

In der Fig. 5 ist eine nicht von der Erfindung umfasste Vergleichsform gezeigt. Demzufolge überragt - analog zur Figur 4 - die zwischen der Netztrennwand-Blende 37 und dem Dachhimmel 11 befindliche, umlaufende Anbindungsstelle A den Trägerteil-Grundkörper 19 in der Fahrzeughochrichtung z nach fahrzeugunten mit einem vertikalen Überstand Δz (Fig. 5). Der vertikale Überstand Δz der Anbindungsstelle A ist, in der Fahrzeughochrichtung z betrachtet, auf gleicher Höhe wie der Kopfairbag 15 positioniert. Im Unterschied zur Erfindung ist in der Fig. 5 zwischen dem Kopfairbag 15 dem vertikalen Überstand Δz der Anbindungsstelle A kein Abschirmelement 21 vorgesehen. Bei einer Kopfairbag-Aktivierung kann daher der sich entfaltende Kopfairbag 15 in Kontakt mit dem vertikalen Überstand Δz der Anbindungsstelle A treten, so dass in der Fig. 5 die Anbindungsstelle A wesentlich stärker von einer Kopfairbag-Auslösung belastet ist als in der Erfindung.

### Bezugszeichenliste

- 1: Netztrennwand
- 3: Insassenraum
- 5: Laderaum
- 7: Aufwickelkassette
- 11: Dachhimmel
- 13: Dachrahmen-Seitenteil
- 15: Kopfairbag
- 17: karosserieseitiges Trägerteil
- 19: Trägerteil-Grundkörper
- 21: Abschirmelement
- 23: Grundkörper-Boden
- 25: fahrzeuginnere Biegekante
- 27: Montageschenkel
- 29: fahrzeuginnere Biegekante
- 31: Tragschenkel
- 33: Tragprofil
- 35: Einhängeöse
- 37: Netztrennwand-Blende
- 39: dachhimmelseitige Montageöffnung
- 43: flächiger Basisabschnitt
- 45: zylindrischer Einführabschnitt
- 47: Blendenöffnung
- 49: Öffnungsrand
- 51: fahrzeugäußere Biegekante
- 53: fahrzeugäußerer Entfaltungsraum
- 55: fahrzeuginnerer Freiraum
- Δz: vertikaler Überstand der Anbindungsstelle
- Δx: Boden-Überstände
- A: Anbindungsstelle

## Patentansprüche

1. Fahrzeugkarosserie, mit einem rohbaufest verbauten Kopfairbag (15) und einem karosserieseitigen Trägerteil (17) zur Halterung eines Anbauteils, wobei das karosserieseitige Trägerteil (17) und der Kopfairbag (15) von einem Dachhimmel (11) sichtgeschützt überdeckt sind, und mit zumindest einem Funktionselement (37), das an einer Anbindungsstelle (A) am Öffnungsrand einer dachhimmelseitigen Montageöffnung (39) befestigt ist, wobei bei einer Airbagaktivierung der sich entfaltende Kopfairbag (15) derart gegen den Dachhimmel (11) drückt, dass sich der Kopfairbag (15) unter Verformung des Dachhimmels (11) in der Fahrzeughochrichtung (z) nach unten in den Fahrzeuginnenraum hinein entfaltet, wobei das karosserieseitige Trägerteil (17) mit einem Abschirmelement (21) ausgebildet ist, das in einer Airbag-Entfaltungsrichtung zwischen dem Kopfairbag (15) und einem Bereich der Anbindungsstelle (A) angeordnet ist, so dass bei der Airbag-Aktivierung die Anbindungsstelle (A) gegenüber dem sich entfaltenden Kopfairbag (15) abgeschirmt ist, **dadurch gekennzeichnet, dass** das karosserieseitige Trägerteil (17) zwei Abschirmelemente (21) aufweist, die in der Fahrzeuglängsrichtung (x) voneinander beabstandet sind.

2. Fahrzeugkarosserie nach dem vorhergehenden Anspruch, **dadurch gekennzeichnet, dass** das karosserieseitige Trägerteil (17) einen Trägerteil-Grundkörper (19) zur Halterung des Anbauteils (9) aufweist, und dass an dem Trägerteil-Grundkörper (19) das Abschirmelement (21) angeformt ist.

3. Fahrzeugkarosserie nach Anspruch 2, **dadurch gekennzeichnet, dass** die zwischen dem Funktionsteil (37) und dem Dachhimmel (11) gebildete Anbindungsstelle (A) mit einem vertikalen Überstand (Δz) den Trägerteil-Grundkörper (19) in der Fahrzeughochrichtung (z) nach fahrzeugunten überragt, und dass der vertikale Überstand (Δz) der Anbindungsstelle (A), in der Fahrzeughochrichtung (z) betrachtet, auf gleicher Höhe wie der Kopfairbag (15) positioniert ist.

4. Fahrzeugkarosserie nach Anspruch 3, **dadurch gekennzeichnet, dass** das Abschirmelement (21) über eine Bauteilhöhe von dem Trägerteil-Grundkörper (19) nach fahrzeugunten abragt, so dass das Abschirmelement (21) in der Fahrzeugquerrichtung (y) in Querflucht zwischen dem Kopfairbag (15) und dem vertikalen Überstand (Δz) der Anbindungsstelle (A) positioniert ist.

5. Fahrzeugkarosserie nach einem der vorhergehenden Ansprüche, **dadurch gekennzeichnet, dass** der Kopfairbag (15) und/oder das karosserieseitige Trägerteil (17) an einem Dachrahmen-Seitenteil (13) befestigt sind, und dass, in der Fahrzeugquerrichtung (y) betrachtet, der Dachhimmel (11) über einen lichten Abstand von dem Dachrahmen-Seitenteil (13) beabstandet ist, und dass der lichte Abstand unterteilt ist in einen fahrzeugäußeren Airbag-Entfaltungsraum (53), in dem der Kopfairbag (15) angeordnet ist, und in einen vor Airbag-Entfaltung geschützten fahrzeuginneren Freiraum (55) zwischen dem Abschirmelement (21) und dem Dachhimmel (11).

6. Fahrzeugkarosserie nach Anspruch 5, **dadurch gekennzeichnet, dass** der Airbag-Entfaltungsraum (53) in der Fahrzeughochrichtung (z) nach fahrzeugoben zumindest teilweise von einem Grundkörper-Boden (23) des Trägerteil-Grundkörpers (19) begrenzt ist, und/oder dass der Airbag-Entfaltungsraum (53) in der Fahrzeugquerrichtung (y) nach fahrzeuginnen vom Abschirmelement (21) und nach fahrzeugaußen vom Dachrahmen-Seitenteil (13) begrenzt ist.

7. Fahrzeugkarosserie nach einem der vorhergehenden Ansprüche, **dadurch gekennzeichnet, dass** das karosserieseitige Trägerteil (17) ein abgekantetes Blechformteil ist, und dass ein Grundkörper-Boden (23) des karosserieseitigen Trägerteils (17) an einer Biegekante (25) in einen fahrzeugäußeren Montageschenkel (27) übergeht, der am Dachrahmen-Seitenteil (13) befestigbar ist, und/oder dass der Grundkörper-Boden (23) des karosserieseitigen Trägerteils (17) an einer Biegekante (29) in ein fahrzeuginneres Tragprofil (33) übergeht, an dem das Anbauteil (9) gehaltert werden kann.

8. Fahrzeugkarosserie nach Anspruch 7, **dadurch gekennzeichnet, dass** der Grundkörper-Boden (23) in der Fahrzeuglängsrichtung (x) nach fahrzeugvorne und/oder nach fahrzeughinten mit einem Boden-Überstand (Δx) verlängert ist, und dass vom Boden-Überstand (Δx) an einer fahrzeuginneren Biegekante (51) eine das Abschirmelement (21) bildende Blechlasche abgekantet ist.

## Claims

1. Vehicle body, having a head airbag (15) built into the bodyshell, and a carrier part (17) on the body for holding an add-on part, wherein the carrier part (17) on the body and the head airbag (15) are covered by a headlining (11) so as to be protected from view, and having at least one functional element (37), which is fixed to the opening edge of a mounting opening (39) on the headlining at an attachment point (A), wherein, when the airbag is activated, the head airbag (15) being deployed presses against the headlining (11) in such a way that the head airbag (15) is deployed downwards into the vehicle interior, deforming the headlining (11) in the vehicle vertical direction (z), wherein the carrier part (17) on the body is formed with a shielding element (21), which is arranged in an airbag deployment direction between the head airbag (15) and a region of the attachment point (A) so that, when the airbag is activated, the attachment point (A) is shielded with respect to the head airbag (15) being deployed, **characterized in that** the carrier part (17) on the body has two shielding elements (21), which are spaced apart from each other in the vehicle longitudinal direction (x) .

2. Vehicle body according to the preceding claim, **characterized in that** the carrier part (17) on the body has a carrier part main body (19) for holding the add-on part (9), and **in that** the shielding element (21) is integrally formed on the carrier part main body (19).

3. Vehicle body according to Claim 2, **characterized in that** the attachment point (A) formed between the functional part (37) and the headlining (11) projects over the carrier part main body (19) in the vehicle vertical direction (z) towards the bottom of the vehicle with a vertical overhang (Δz), and **in that** the vertical overhang (Δz) of the attachment point (A), viewed in the vehicle vertical direction (z), is positioned at the same height as the head airbag (15).

4. Vehicle body according to Claim 3, **characterized in that** the shielding element (21) projects downwards towards the bottom of the vehicle from the carrier part main body (19) over a component height, so that the shielding element (21) is positioned in the vehicle transverse direction (y) in a transverse alignment between the head airbag (15) and the vertical overhang (Δz) of the attachment point (A).

5. Vehicle body according to one of the preceding claims, **characterized in that** the head airbag (15) and/or the carrier part (17) on the body are fixed to a roof frame side part (13), and **in that**, viewed in the vehicle transverse direction (y), the headlining (11) is spaced apart from the roof frame side part (13) by a clear distance, and **in that** the clear distance is subdivided into an airbag deployment space (53) on the outside of the vehicle, in which the head airbag (15) is arranged, and into a clear space (55) on the inside of the vehicle, protected against airbag deployment, between the shielding element (21) and the headlining (11).

6. Vehicle body according to Claim 5, **characterized in that** the airbag deployment space (53) is at least partly limited towards the top of the vehicle in the vehicle vertical direction (z) by a main body base (23) of the carrier part main body (19), and/or **in that** the airbag deployment space (53) is limited towards the interior of the vehicle in the vehicle transverse direction (y) by the shielding element (21) and towards the outside of the vehicle by the roof frame side part (13).

7. Vehicle body according to one of the preceding claims, **characterized in that** the carrier part (17) on the body is a folded sheet metal moulding, and **in that** a main body base (23) of the carrier part (17) on the body merges at a bending edge (25) into a mounting leg (27), on the outside of the vehicle, which can be secured to the roof frame side part (13), and/or **in that** the main body base (23) of the carrier part (17) on the body merges at a bending edge (29) into a carrier profile (33), on the interior of the vehicle, on which the add-on part (9) can be mounted.

8. Vehicle body according to Claim 7, **characterized in that** the main body base (23) is lengthened in the vehicle longitudinal direction (x) towards the front of the vehicle and/or towards the rear of the vehicle by a base overhang (Δx), and **in that** a sheet metal tab forming the shielding element (21) is folded over from the base overhang (Δx) at a bending edge (51) in the interior of the vehicle.

## Revendications

1. Carrosserie de véhicule, avec un coussin gonflable de tête (15) monté de manière solidaire à la carrosserie brute et une partie de support (17) située du côté de la carrosserie pour le maintien d'une partie rapportée, la partie de support (17) située du côté de la carrosserie et le coussin gonflable de tête (15) étant recouverts à l'abri des regards par un habillage de plafond (11), et avec au moins un élément fonctionnel (37) qui est fixé au niveau d'un point d'attache (A) sur le bord d'ouverture d'une ouverture de montage (39) située du côté de l'habillage de plafond, le coussin gonflable de tête (15) qui se déploie lors d'une activation du coussin gonflable de tête appuyant contre l'habillage de plafond (11), de telle sorte que le coussin gonflable de tête (15) se déploie vers le bas dans l'habitacle de véhicule en déformant l'habillage de plafond (11) dans la direction verticale du véhicule (z), la partie de support (17) située du côté de la carrosserie étant réalisée avec un élément de protection (21) qui est agencé dans une direction de déploiement du coussin gonflable entre le coussin gonflable de tête (15) et une zone du point de fixation (A), de telle sorte que, lors de l'activation du coussin gonflable, le point d'attache (A) est protégé du coussin gonflable de tête (15) qui se déploie, **caractérisée en ce que** la partie de support (17) située du côté de la carrosserie présente deux éléments de protection (21) qui sont espacés l'un de l'autre dans la direction longitudinale du véhicule (x).

2. Carrosserie de véhicule selon la revendication précédente, **caractérisée en ce que** la partie de support (17) située du côté de la carrosserie présente un corps de base de partie de support (19) pour le maintien de la partie rapportée (9), et **en ce que** l'élément de protection (21) est formé sur le corps de base de partie de support (19).

3. Carrosserie de véhicule selon la revendication 2, **caractérisée en ce que** le point d'attache (A) formé entre la partie fonctionnelle (37) et l'habillage de plafond (11) dépasse le corps de base de partie de support (19) avec un dépassement vertical (Δz) vers le dessous du véhicule dans la direction verticale de véhicule (z), et **en ce que** le dépassement vertical (Δz) du point d'attache (A), considéré dans la direction verticale de véhicule (z), est positionné à la même hauteur que le coussin gonflable de tête (15).

4. Carrosserie de véhicule selon la revendication 3, **caractérisée en ce que** l'élément de protection (21) dépasse d'une hauteur de composant du corps de base de partie de support (19) vers le dessous du véhicule, de telle sorte que l'élément de protection (21) est positionné dans la direction transversale de véhicule (y) dans l'alignement transversal entre le coussin gonflable de tête (15) et le dépassement vertical (Δz) du point d'attache (A).

5. Carrosserie de véhicule selon l'une quelconque des revendications précédentes, **caractérisée en ce que** le coussin gonflable de tête (15) et/ou la partie de support (17) située du côté de la carrosserie sont fixés à une partie latérale du cadre de toit (13), et **en ce que**, considéré dans la direction transversale de véhicule (y), l'habillage de plafond (11) est espacé de la partie latérale du cadre de toit (13) d'une distance libre, et **en ce que** la distance libre est subdivisée en un espace de déploiement de coussin gonflable (53) extérieur au véhicule, dans lequel est agencé le coussin gonflable de tête (15), et en un espace libre (55) intérieur au véhicule, protégé contre le déploiement du coussin gonflable, entre l'élément de protection (21) et l'habillage de plafond (11).

6. Carrosserie de véhicule selon la revendication 5, **caractérisée en ce que** l'espace de déploiement de coussin gonflable (53) est délimité dans la direction verticale de véhicule (z) vers le haut du véhicule au moins partiellement par un fond de corps de base (23) du corps de base de partie de support (19), et/ou **en ce que** l'espace de déploiement de coussin gonflable (53) est délimité dans la direction transversale de véhicule (y) vers l'intérieur du véhicule par l'élément de protection (21) et vers l'extérieur du véhicule par la partie latérale du cadre de toit (13).

7. Carrosserie de véhicule selon l'une quelconque des revendications précédentes, **caractérisée en ce que** la partie de support (17) située du côté de la carrosserie est une partie façonnée en tôle pliée, et **en ce qu'**un fond de corps de base (23) de la partie de support (17) située du côté de la carrosserie se transforme, au niveau d'une arrête de pliage (25), en une branche de montage (27) extérieure au véhicule, qui peut être fixée sur la partie latérale du cadre de toit (13), et/ou **en ce que** le fond de corps de base (23) de la partie de support (17) située du côté de la carrosserie se transforme, au niveau d'une arête de pliage (29), en un profilé porteur (33) intérieur au véhicule, sur lequel la partie rapportée (9) peut être maintenue.

8. Carrosserie de véhicule selon la revendication 7, **caractérisée en ce que** le fond de corps de base (23) est prolongé dans la direction longitudinale de véhicule (x) vers l'avant du véhicule et/ou vers l'arrière du véhicule avec un dépassement de fond (Δx), et **en ce qu'**une patte de tôle formant l'élément de protection (21) est pliée à partir du dépassement de fond (Δx) au niveau d'une arête de pliage (51) intérieure au véhicule.
